# EUROPEAN PATENT APPLICATION

(11) **EP 1 993 285 A1**
(43) Date of publication of application: **19.11.2008**
(21) Application number: 06834605.5
(22) Date of filing: 13.12.2006
(51) Int. Cl.: H04N 7/04, H04N 7/173

(54) **TRANSMITTING APPARATUS AND TRANSMITTING/RECEIVING APPARATUS**

(30) Priority: 20.02.2006 JP 2006042883
(71) Applicant: Panasonic Corporation, Kadoma-shi Osaka 571-8501 (JP)
(72) Inventor: YANAGISAWA, Ryogo, c/o Matsushita El. Ind. Co., Ltd., IPROC, Chuo-ku, Osaka-shi, Osaka 540-6207 (JP)
(74) Representative: Grünecker, Kinkeldey, Stockmair & Schwanhäusser Anwaltssozietät
(86) International application number: PCT/JP2006/324850
(87) International publication number: WO 2007/097099

(57) **Abstract**

A transmitter **14**, which receives an input video signal VS_IN and an input audio signal AS_IN from an MPEG decoder **17**, includes therein a dummy signal production circuit **11** and a selection circuit **12**. The dummy signal production circuit **11** produces a dummy video signal VS_D having a higher resolution than that of the input video signal VS_IN. The selection circuit **12** outputs one of the input video signal VS_IN and the dummy video signal VS_D as a selected video signal VS to a video/audio transmitter circuit **13**, based on a control signal CS input based on an amount of information of the input audio signal AS_IN. The video/audio transmitter circuit **13** multiplexes the input audio signal AS_IN with the selected video signal VS to produce and transmit a video/audio signal VAS. Thus, irrespective of the format of the video signal, an audio signal having a high sample rate or a multi-channel audio signal can be transmitted while being multiplexed with the video signal.

## Description

### TECHNICAL FIELD

The present invention relates to a transmitter and a transmitter/receiver for digital signals, and more particularly to a transmitter and a transmitter/receiver used for transmitting video signals and audio signals of a STB (Set Top Box), a DVD player, a DVD recorder, or the like.

### BACKGROUND ART

Transmitters and transmitters/receivers for digital signals transmit a digital signal with an audio signal being multiplexed on the vertical blanking period and the horizontal blanking period of a video signal, as described in Patent Document 1, for example.

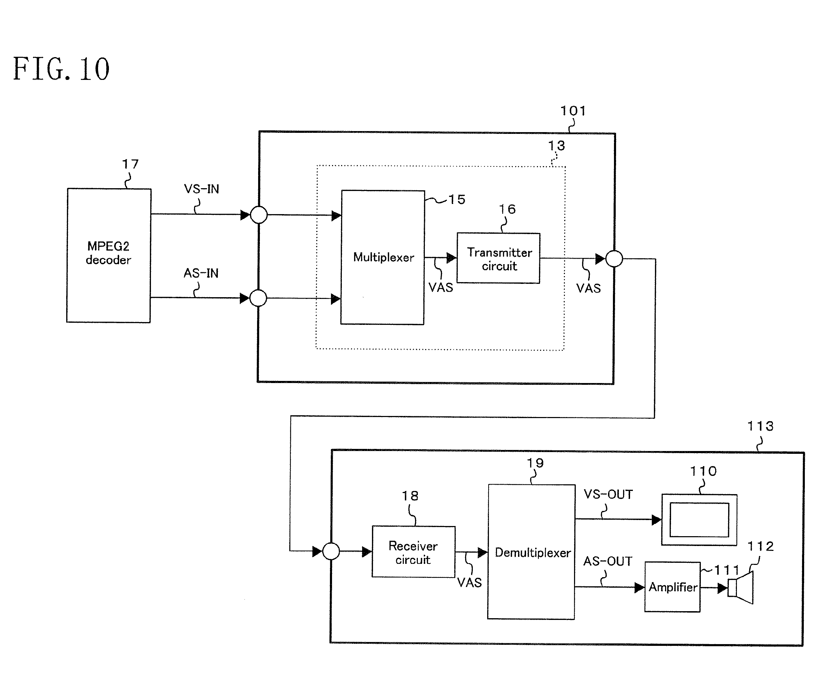

FIG. **10** shows a conventional technique for a transmitter and a transmitter/receiver used for transmitting a video signal and an audio signal.

In the figure, a transmitter **101** includes therein a video/audio transmitter circuit **13,** and the video/audio transmitter circuit **13** includes therein a multiplexer **15** and a transmitter circuit **16.** A receiver **113** includes therein a receiver circuit **18,** a demultiplexer **19,** a monitor **110,** an amplifier **111,** and a speaker **112.** The transmitter **101** and the receiver **113** together form a transmitter/receiver.

Referring to FIG. **10****,** the operation of the conventional transmitter and the conventional transmitter/receiver will now be described.

First, an MPEG2 decoder **17** decodes MPEG2 data recorded on a DVD disc, or the like, to produce an input video signal VS_IN and an input audio signal AS_IN, which are input to the transmitter **101**. The multiplexer **15** in the transmitter **101** multiplexes the input audio signal AS_IN on the vertical blanking period and the horizontal blanking period of the input video signal VS_IN to thereby produce a video/audio signal VAS. Then, the transmitter circuit **16** performs a parallel/serial conversion on the parallel video/audio signal VAS and transmits the serial video/audio signal VAS to the receiver **113.** In some cases, an encryption operation is performed in the transmitter circuit **16.**

In the receiver **113,** the receiver circuit **18** performs a serial/parallel conversion on the received serial video/audio signal VAS to supply the parallel video/audio signal VAS to the demultiplexer **19.** The demultiplexer **19** separates an output video signal VS_OUT and an output audio signal AS_OUT from the parallel video/audio signal VAS, and outputs the output video signal VS_OUT to a digital TV **110** and the output audio signal AS_OUT to the speaker **112** via the amplifier **111.**

The MPEG2 decoder **17** and the transmitter **101** together form a DVD player or a DVD recorder, for example, and the receiver **113** forms a digital TV, for example. Using a transmitter/receiver formed by the transmitter **101** and the receiver **113** as described above, the video and the audio recorded on a DVD disc can be reproduced on the digital TV.

The input video signal VS_IN input from the MPEG2 decoder **17** is recorded, for example, in a signal format called 480p, including 720 pixels horizontally x 480 lines vertically.

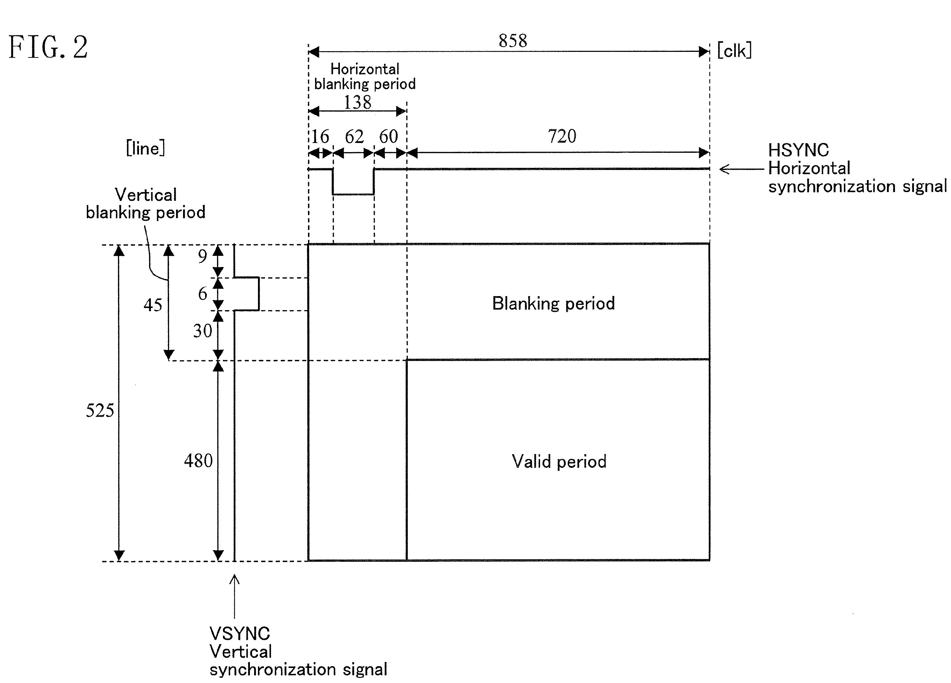

FIG. **2** is a schematic diagram showing a 480p video signal.

In the figure, in addition to the valid period (video data) including 720 pixels horizontally x 480 lines vertically, there is a horizontal blanking period of 138 pixels horizontally and a vertical blanking period of 45 lines vertically. Thus, a 480p video signal includes 858 pixels horizontally x 525 lines vertically, including the horizontal blanking period and the vertical blanking period. A horizontal synchronization signal HSYNC and a vertical synchronization signal VSYNC are added to the horizontal blanking period and the vertical blanking period, respectively, and the position and timing of scanning are determined based on the two synchronization signals.

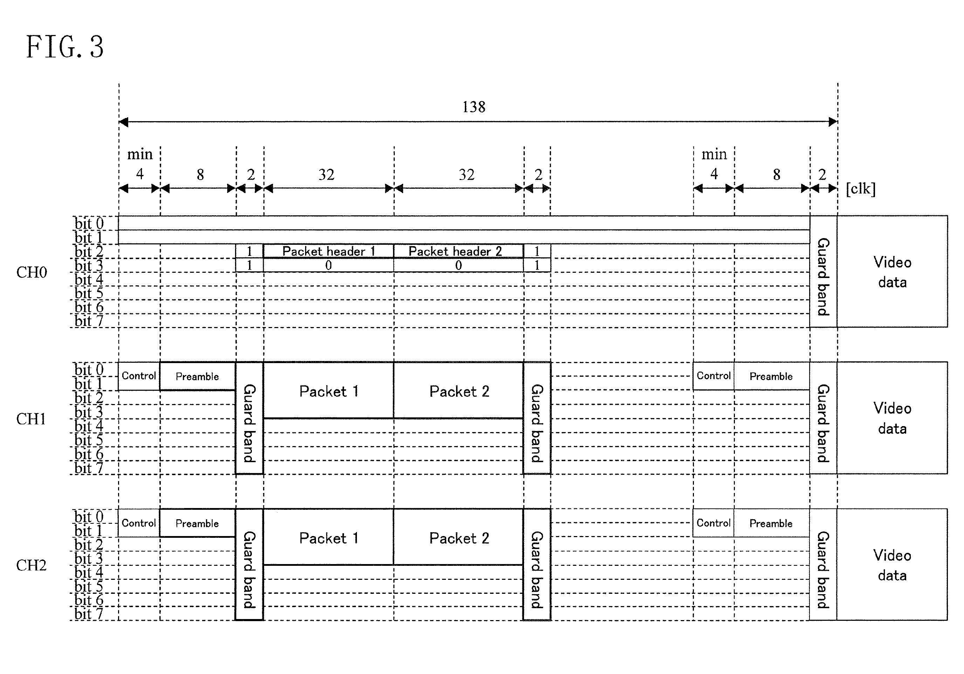

A 480p video signal of FIG. **2** may be multiplexed with an audio signal in packets as shown in FIG. **3****,** which is used in Patent Document 1, for example.

Referring now to FIGs. **2** and **3****,** the operation of multiplexing the input audio signal AS_IN with the input video signal VS_IN in the conventional transmitter and the conventional transmitter/receiver of FIG. **10** will be described.

In the figures, Packet 1 and Packet 2, each having 32 pixels x 8 bits = 256 bits, of the input audio signal are multiplexed with the input video signal over one horizontal period of the video channels (CHO, CH1, CH2). For example, since a 2-channel stereo input audio signal includes a total of 64 bits, i.e., 32 bits for the L channel and 32 bits for the R channel, 256 bits / 64 bits = 4 samples of a 2-channel stereo input audio signal can be transmitted while being multiplexed with the input video signal only by using Packet 1 of FIG. **3****.**

The 480p video signal of FIG. **2** has a horizontal blanking period being 138 pixels long, and if an input audio signal is multiplexed with the video signal, a maximum of 108 pixels are available for the packets, excluding the 8-pixel preamble used for the distinction between an input video signal and an input audio signal, the 2-pixel guard band, and the control being a minimum of 4 pixels. Therefore, a maximum of three packets can be transmitted over one channel. Specifically, 32 pixels x 8 bits x 3 packets =768 bits of the input audio signal can be multiplexed and transmitted over one channel, and a maximum of 12 samples of the 2-channel stereo input audio signal can be transmitted over one horizontal period. Since one horizontal period of the 480p format shown in FIG. **2** is 31.469 kHz, up to 31.469 kHz (sample rate) x 12 samples = 377.628 kHz of the input audio signal can be transmitted while being multiplexed with the input video signal.

In recent years, a video signal recorded on a CD or a DVD is in some cases encrypted in order to prevent the unauthorized duplication thereof. For example, Patent Document 2 describes a technique for encrypting a video signal, wherein the encryption key is updated for each of the horizontal synchronization signal and the vertical synchronization signal to thereby improve the anti-tampering property.
Patent Document 1: Japanese National Phase PCT Laid-Open Publication No. 2005-514849
Patent Document 2: Japanese Laid-Open Patent Publication No. 2004-194144

### DISCLOSURE OF THE INVENTION

### Problems To Be Solved By The Invention

However, with a transmitter and a transmitter/receiver using the technique described in Patent Document 1, the video signal has a sufficient bandwidth for multiplexing a 2-channel stereo audio signal at a sample rate of 192 kHz, but the bandwidth will be insufficient and it will be difficult to transfer an audio signal multiplexed with the video signal if the audio signal is of a higher sample rate or if the audio signal is a multi-channel audio signal. Moreover, since it is presumed that an audio signal is multiplexed with a video signal, the multiplexing will be difficult if there exists only the audio signal as is the case with CDs.

Moreover, the technique described in Patent Document 2 cannot be applied to cases where there is only the audio signal where the horizontal synchronization signal, or the like, is absent, whereby it is not possible to improve the anti-tampering property.

The present invention has been made in view of the problems set forth above, and has an object to provide a transmitter and a transmitter/receiver capable of transmit an audio signal of a high sample rate or a multi-channel audio signal multiplexed with a video signal, irrespective of the video signal format or the presence/absence of the video signal.

### Means For Solving The Problems

In order to achieve the object set forth above, the present invention provides a transmitter and a transmitter/receiver, wherein a dummy video signal is produced, and an input audio signal is multiplexed with the dummy video signal.

Specifically, a transmitter of the present invention is a transmitter for transmitting a video/audio signal, including: dummy signal production means for producing a dummy video signal; and video/audio transmitter means for multiplexing together the dummy video signal and an input audio signal input to the transmitter to produce and transmit a video/audio signal.

The present invention is directed to a transmitter as set forth above, wherein: an input video signal of a predetermined resolution is input; the dummy signal production means produces a dummy video signal having a higher resolution than the predetermined resolution of the input video signal; the transmitter further includes selection means for selecting one of the input video signal and the dummy video signal based on an amount of information of the input audio signal to output the video signal selected as a selected video signal; and the video/audio transmitter means produces the video/audio signal by multiplexing together the selected video signal and the input audio signal.

The present invention is directed to a transmitter as set forth above, wherein the selection means is controlled by an input control signal to select the dummy video signal when the amount of information of the input audio signal is such that the input audio signal cannot be multiplexed with the input video signal of the predetermined resolution.

The present invention is directed to a transmitter as set forth above, wherein the video/audio transmitter means multiplexes the input audio signal on at least one of a vertical blanking period and a horizontal blanking period of the selected video signal.

The present invention is directed to a transmitter as set forth above, wherein the dummy signal production means produces a dummy video signal, which includes a vertical synchronization signal, a horizontal synchronization signal and predetermined video data.

The present invention is directed to a transmitter as set forth above, further including format detection means for detecting a format of the input video signal of the predetermined resolution to output a detection signal, which indicates whether the input audio signal can be multiplexed with the input video signal of the predetermined resolution, based on the format information and the amount of information of the input audio signal, wherein the selection means selects one of the dummy video signal and the input video signal based on the detection signal input from the format detection means.

The present invention is directed to a transmitter as set forth above, wherein the video/audio transmitter means multiplexes the input audio signal on at least one of a vertical blanking period and a horizontal blanking period of the selected video signal.

The present invention is directed to a transmitter as set forth above, wherein the dummy signal production means produces a dummy video signal, which includes a vertical synchronization signal, a horizontal synchronization signal and predetermined video data.

A transmitter/receiver of the present invention is a transmitter/receiver, including: a transmitter as set forth above; and a receiver for receiving a video/audio signal transmitted from the transmitter, wherein: the transmitter further includes: output means for outputting the input video signal; and video display means for displaying the input video signal output from the output means; and the receiver includes audio receiving means for receiving the video/audio signal transmitted from the video/audio transmitter means in the transmitter and separating the received video/audio signal into an output video signal and an output audio signal.

The present invention is directed to a transmitter/receiver as set forth above, wherein the output means in the transmitter outputs the input video signal after converting the input video signal to an analog video signal.

The present invention is directed to a transmitter/receiver as set forth above, wherein the video/audio transmitter means in the transmitter multiplexes the input audio signal on at least one of a vertical blanking period and a horizontal blanking period of the selected video signal.

The present invention is directed to a transmitter/receiver as set forth above, wherein the dummy signal production means in the transmitter produces a dummy video signal, which includes a vertical synchronization signal, a horizontal synchronization signal and predetermined video data.

Another transmitter/receiver of the present invention is a transmitter/receiver, including: a transmitter as set forth above; and a receiver for receiving a video/audio signal transmitted from the transmitter, wherein: the transmitter further includes: output means for outputting the input video signal; and video display means for displaying the input video signal output from the output means; and the receiver includes audio receiving means for receiving the video/audio signal transmitted from the video/audio transmitter means in the transmitter and separating the received video/audio signal into an output video signal and an output audio signal.

The present invention is directed to a transmitter/receiver as set forth above, wherein the output means in the transmitter outputs the input video signal after converting the input video signal to an analog video signal.

The present invention is directed to a transmitter/receiver as set forth above, wherein the video/audio transmitter means in the transmitter multiplexes the input audio signal on at least one of a vertical blanking period and a horizontal blanking period of the selected video signal.

The present invention is directed to a transmitter/receiver as set forth above, wherein the dummy signal production means in the transmitter produces a dummy video signal, which includes a vertical synchronization signal, a horizontal synchronization signal and predetermined video data.

Thus, according to the present invention, an input audio signal is multiplexed with a dummy video signal produced by dummy signal production means. Therefore, if the resolution of the dummy video signal is increased, an input audio signal can be multiplexed with the high-resolution dummy video signal to transmit the multiplexed video/audio signal, even if the audio signal is an audio signal having a high sample rate or a multi-channel audio signal.

Moreover, even if there exists only the audio signal, with the video signal being absent, such as when a CD is played, the audio signal can be multiplexed with the dummy video signal, and it is possible to multiplex and transmit the audio signal.

Moreover, where there exists only the audio signal, the anti-tampering property can be improved by updating the encryption key for each of the horizontal synchronization signal and the vertical synchronization signal of the video/audio signal obtained by multiplexing the audio signal with the dummy video signal.

### Effects Of The Invention

As described above, according to the present invention, a dummy video signal, particularly a high-resolution dummy video signal, is produced, and an input audio signal is multiplexed with the dummy video signal. Therefore, irrespective of the sample rate, etc., of the audio signal, it is possible to transmit a video/audio signal obtained by multiplexing the audio signal with the video signal, and it is possible to improve the anti-tampering property.

### BRIEF DESCRIPTION OF THE DRAWINGS

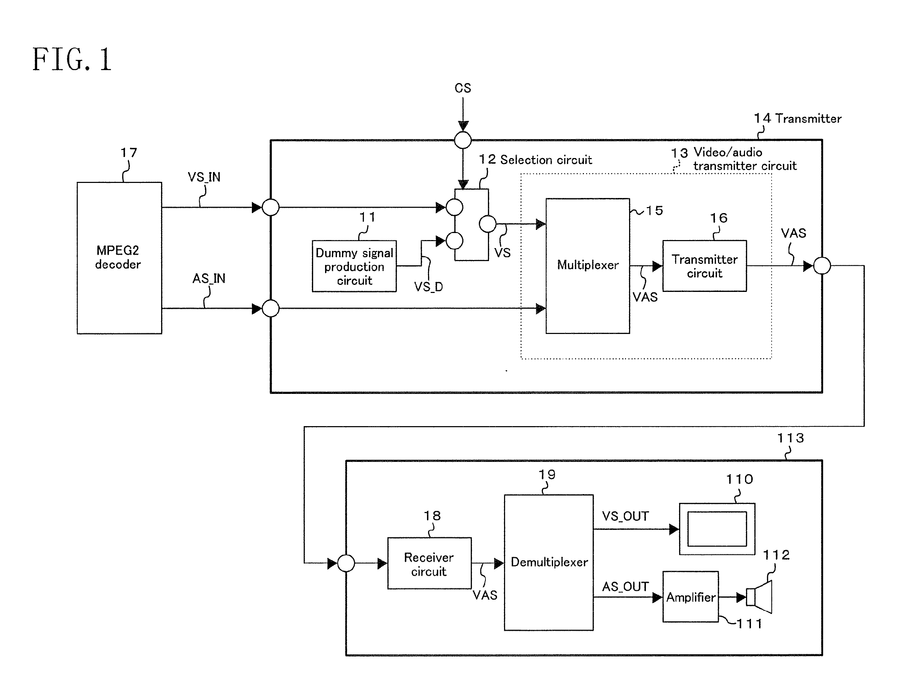

[FIG. **1**] FIG. **1** is a block diagram showing a general configuration of a transmitter according to a first embodiment of the present invention.
[FIG. **2**] FIG. **2** is a schematic diagram showing a 480p video signal.
[FIG. **3**] FIG. **3** is a schematic diagram showing a technique for multiplexing an audio signal with a video signal in packets.

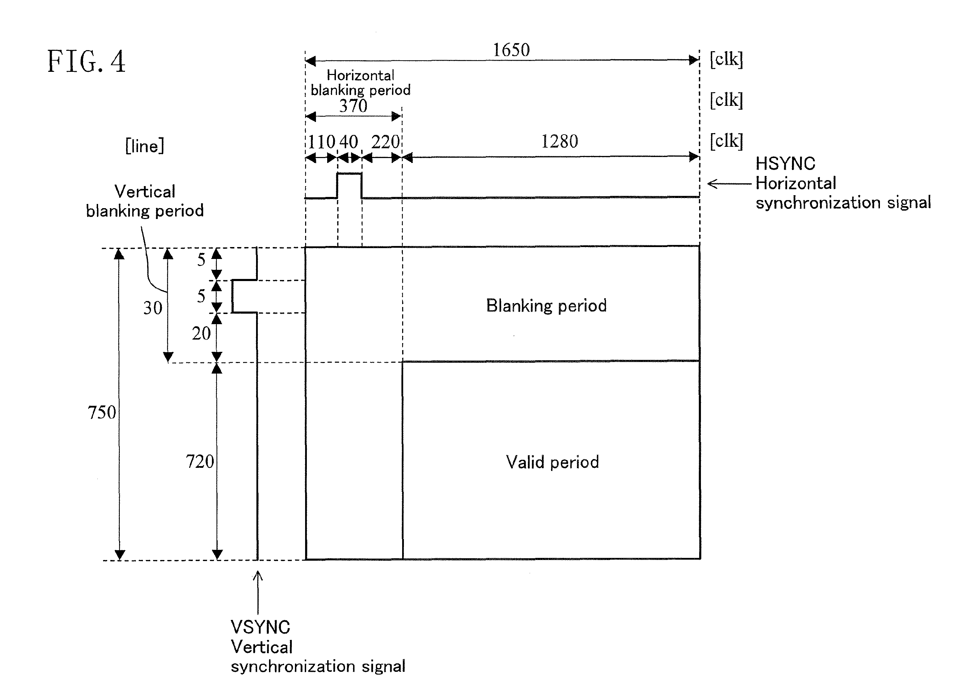

[FIG. **4**] FIG. **4** is a schematic diagram showing a 720p video signal.

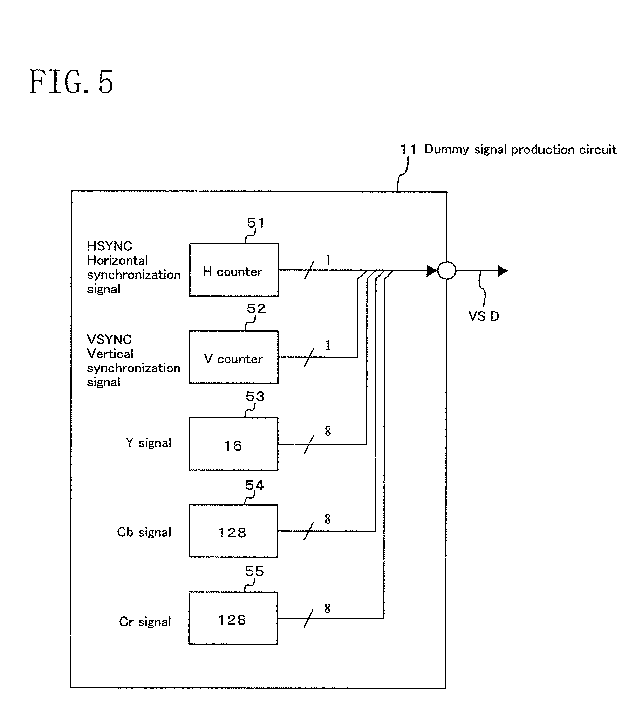

[FIG. **5**] FIG. **5** is a block diagram showing a general configuration of a dummy signal production circuit in a transmitter in one embodiment of the present invention.

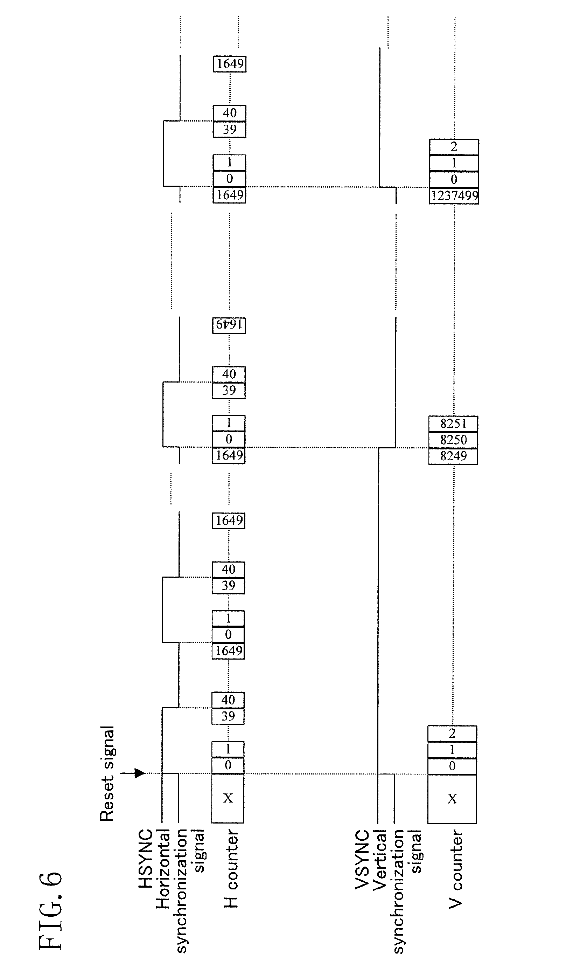

[FIG. **6**] FIG. **6** is an operation diagram showing an operation of the dummy signal production circuit.

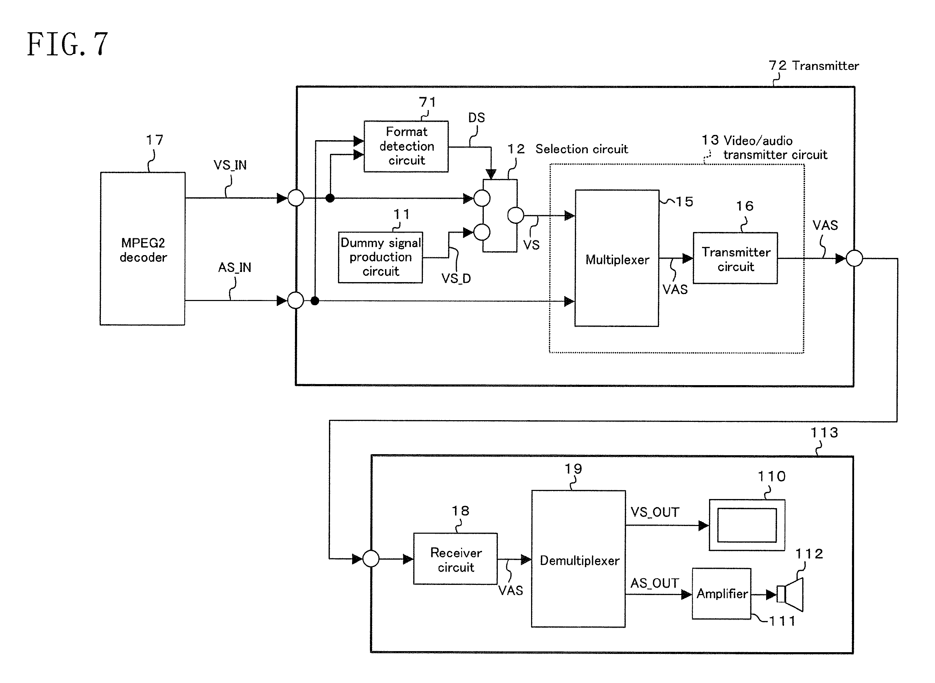

[FIG. **7**] FIG. **7** is a block diagram showing a general configuration of a transmitter according to a second embodiment of the present invention.

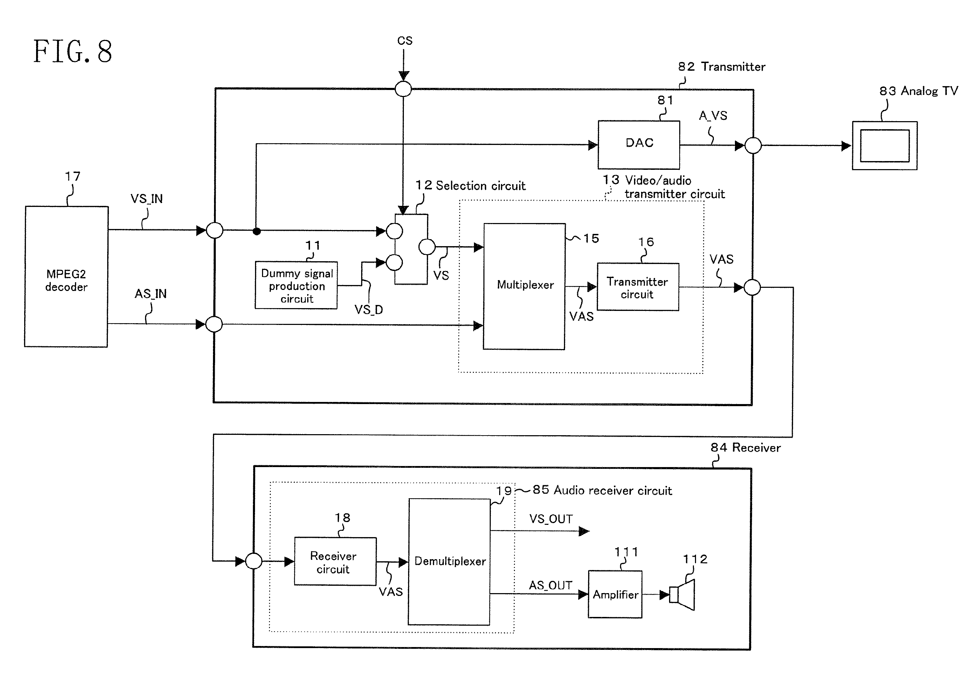

[FIG. **8**] FIG. **8** is a block diagram showing a general configuration of a transmitter/receiver according to a third embodiment of the present invention.

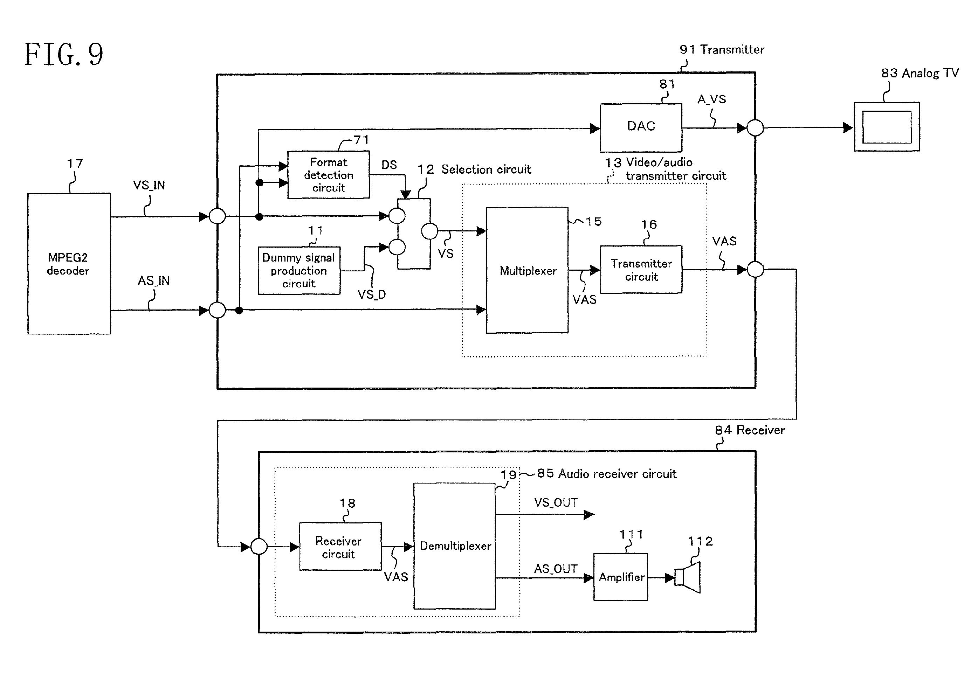

[FIG. **9**] FIG. **9** is a block diagram showing a general configuration of a transmitter/receiver according to an alternative embodiment of the present invention.
[FIG. **10**] FIG. **10** is a block diagram showing a general configuration of a conventional transmitter and a conventional transmitter/receiver.

### DESCRIPTION OF REFERENCE NUMERALS

- 11: Dummy signal production circuit (dummy signal production means)
- 12: Selection circuit (selection means)
- 13: Video/audio transmitter circuit (video/audio transmitter means)
- 14, 72, 82, 91: Transmitter
- 71: Format detection circuit (format detection means)
- 81: DAC (output means)
- 83: Analog TV (video display means)
- 84, 113: Receiver
- 85: Audio receiver circuit (audio receiving means)
- A_VS: Analog video signal
- AS_IN: Input audio signal
- AS_OUT: Output audio signal
- CS: Control signal
- DS: Detection signal
- VAS: Video/audio signal
- VS: Selected video signal
- VS_D: Dummy video signal
- VS_IN: Input video signal
- VS_OUT: Output video signal
- HSYNC: Horizontal synchronization signal
- VSYNC: Vertical synchronization signal

### BEST MODE FOR CARRYING OUT THE INVENTION

Transmitters and transmitters/receivers of embodiments of the present invention will now be described with reference to the drawings.

### (First Embodiment)

FIG. **1** is a block diagram showing a general configuration of a transmitter according to a first embodiment of the present invention.

In the figure, a transmitter **14** includes therein a dummy signal production circuit (the dummy signal production means) **11**, a selection circuit (the selection means) **12,** and a video/audio transmitter circuit (the video/audio transmitter means) **13,** and the video/audio transmitter circuit **13** includes therein a multiplexer **15** and a transmitter circuit **16**.

Reference numeral **113** denotes a receiver, and the receiver **113** includes therein a receiver circuit **18**, a demultiplexer **19**, a monitor **110,** an amplifier **111**, and a speaker **112.**

Elements of like reference numerals to those of the conventional transmitter and the conventional transmitter/receiver (FIG. **10**) operate similarly, and will not be further described below.

Referring now to FIG. **1**, an operation of a transmitter of the first embodiment will be described.

The input video signal VS_IN and the input audio signal AS_IN, which have been decoded by the MPEG2 decoder **17,** are input to the transmitter **14,** where the input video signal VS_IN is supplied to the selection circuit **12.** The input video signal VS_IN is a 480p video signal as shown in FIG. **2****.** A dummy video signal VS_D produced by the dummy signal production circuit **11** is also input to the selection circuit **12**. The dummy video signal VS_D is a 720p video signal having a higher resolution than the input video signal VS_IN.

FIG. **4** is a schematic diagram showing a 720p video signal.

In the figure, in addition to the valid period (video data) including 1280 pixels horizontally x 720 lines vertically, there is a horizontal blanking period of 370 pixels horizontally and a vertical blanking period of 30 lines vertically. Thus, a 720p video signal includes 1650 pixels horizontally x 750 lines vertically, including the horizontal blanking period and the vertical blanking period. As with the 480p video signal of FIG. **2**, the horizontal synchronization signal HSYNC and the vertical synchronization signal VSYNC are added to the horizontal blanking period and the vertical blanking period, respectively, and the position and timing of scanning are determined based on the two synchronization signals.

Where an audio signal is multiplexed in packets on the horizontal blanking period and the vertical blanking period of a 720p video signal as shown in FIG. **3**, a maximum of 10 packets can be transmitted over one horizontal period because the horizontal blanking period of the 720p video signal shown in FIG. **4** is 370 pixels long. Where 8 channels of an audio signal are transmitted, each channel carrying 32 bits, since one sample can be multiplexed in one packet, a maximum of 10 samples of the 8-channel audio signal can be multiplexed and transmitted over one horizontal period. Since one horizontal period of a 720p video signal of FIG. **4** is 44.955 kHz, an audio signal having a sample rate of up to 44.955 kHz x 10 samples =449.55 kHz can be transmitted while being multiplexed with a video signal. Thus, there is a sufficient bandwidth for multiplexing an 8-channel audio signal having a sample rate of 192 kHz.

The selection circuit **12** of FIG. **1** selects one of the dummy video signal VS_D and the input video signal VS_IN based on a control signal CS, which is input based on the amount of information of the input audio signal AS_IN and the bandwidth of the input video signal VS_IN, and outputs the selected video signal as a selected video signal VS.

For example, where the input video signal VS_IN is a 480p video signal and the dummy video signal VS_D is a 720p video signal, if the input audio signal AS_IN is a 2-channel stereo audio signal having a sample rate of 192 kHz, the input video signal VS_IN is output as the selected video signal VS, because the input video signal VS_IN can be multiplexed with a 2-channel stereo audio signal having a sample rate of 192 kHz. If the input audio signal AS_IN is an 8-channel audio signal having a sample rate of 192 kHz, the dummy video signal VS_D is output as the selected video signal VS, because the input video signal VS_IN cannot be multiplexed with an 8-channel audio signal having a sample rate of 192 kHz.

Then, the multiplexer **15** in the video/audio transmitter circuit **13** multiplexes together the selected video signal VS and the input audio signal AS_IN to thereby produce the video/audio signal VAS. The produced video/audio signal VAS is transmitted to the receiver **113** by the transmitter circuit **16** in the video/audio transmitter circuit **13**.

FIG. 5 is a block diagram showing a general configuration of the dummy signal production circuit **11**.

In the figure, an H counter **51** produces the horizontal synchronization signal HSYNC, and a V counter **52** produces the vertical synchronization signal VSYNC. The two synchronization signals are each a 1-bit signal.

A Y signal production circuit **53** produces a luminance signal Y, a Cb signal production circuit **54** a color difference signal Cb, and a Cr signal production circuit 55 a color difference signal Cr, the three signals Y, Cb and Cr representing video data. The three signals Y, Cb and Cr are each an 8-bit signal, and are set to fixed values of "Y=16 (00010000)", "Cb=128 (10000000)" and "Cr=128 (10000000)", for example.

FIG. **6** is an operation diagram showing an operation of producing the horizontal synchronization signal HSYNC and the vertical synchronization signal VSYNC by the H counter **51** and the V counter **52.**

An operation of producing the synchronization signals HSYNC and VSYNC for a 720p (1650 pixels horizontally x 750 lines vertically) video signal will now be described.

First, upon receiving a reset signal, the H counter **51** and the V counter **52** are initialized and the two counters **51** and **52** start operating simultaneously. Thereafter, the H counter **51** counts from "0" through "1649 (=1650-1)" repeatedly. Herein, the horizontal synchronization signal HSYNC being "0" is output for count values from "0" to "39", and the horizontal synchronization signal HSYNC being "1" is output for any other count values. The V counter **52** counts from "0" through "1237499 (=1650x750-1)" repeatedly. The vertical synchronization signal VSYNC being "0" is output for count values from "0" to "8249 (=1650x4-1)", and the vertical synchronization signal VSYNC being "1" is output for any other count values.

If the 720p dummy video signal VS_D produced by the dummy signal production circuit **11** shown in FIG. **5** is viewed on the monitor **110**, the screen of the 720p format will appear solid black. The selection circuit **12** outputs one of the dummy video signal VS_D and the input video signal VS_IN as the selected video signal VS, and the multiplexer **15** multiplexes the selected video signal VS with the input audio signal AS_IN to thereby produce the video/audio signal VAS.

Therefore, in the present embodiment, where the input audio signal AS_IN cannot be multiplexed with the input video signal VS_IN due to the insufficient bandwidth of the input video signal VS_IN input to the transmitter **14,** the selection circuit **12** selects the dummy video signal VS_D having a higher resolution than the input video signal VS_IN based on the control signal CS, whereby the input audio signal AS_IN is transmitted while being multiplexed with the dummy video signal VS_D. Thus, as compared with conventional techniques, the present invention is capable of multiplexing and transmitting audio signals of higher sample rates and multi-channel audio signals.

Even if there exists only the input audio signal AS_IN, with the input video signal VS_IN being absent, such as when a CD is played, the selection circuit **12** can constantly select the dummy video signal VS_D to output the dummy video signal VS_D as the selected video signal VS, thus making it possible to multiplex and transmit the input audio signal AS_IN.

Moreover, where there exists only the input audio signal AS_IN, the anti-tampering property can be improved by updating the encryption key for each of the horizontal synchronization signal and the vertical synchronization signal of the video/audio signal VAS obtained by multiplexing the input audio signal AS_IN with the dummy video signal VS_D.

### (Second Embodiment)

FIG. **7** is a block diagram showing a general configuration of a transmitter according to a second embodiment of the present invention.

A transmitter **72** shown in the figure differs from the transmitter of the first embodiment (FIG. **1**) only in that the transmitter **72** includes therein a format detection circuit (the format detection means) **71**, wherein the selection circuit **12** selects one of the input video signal VS_IN and the dummy video signal VS_D based on a detection signal DS produced by the format detection circuit **71**. Otherwise, the configuration is similar to that of the first embodiment (FIG. **1**), and will not be further described below.

In the present embodiment, the format detection circuit **71** detects the format of the input video signal VS_IN. The method for detecting the format may be to measure the horizontal period and the vertical period of the input video signal VS_IN by means of a counter. If the counter measures the horizontal period to be 858 pixels and the vertical period to be 525 lines, it is then determined that the format of the input video signal VS_IN is 480p.

Moreover, the format detection circuit **71** determines whether the input audio signal AS_IN can be multiplexed with the input video signal VS_IN based on the amount of information of the input audio signal AS_IN input to the transmitter **72** and the format information of the input video signal VS_IN input to the transmitter **72**, and outputs the result to the selection circuit **12** as the detection signal DS.

If the input audio signal AS_IN can be multiplexed with the input video signal VS_IN, the selection circuit **12** outputs the input video signal VS_IN as the selected video signal VS based on the detection signal DS. If the multiplexing cannot be done, the dummy video signal VS_D produced by the dummy signal production circuit **11** is output as the selected video signal VS.

Therefore, when the selection circuit **12** outputs the selected video signal VS in the present embodiment, one of the input video signal VS_IN and the dummy video signal VS_D is selected automatically based on the detection signal DS, thereby eliminating the need to control the selection circuit **12.**

Even if there exists only the input audio signal AS_IN, such as when a CD is played, the format detection by the format detection circuit **71** is performed appropriately to output the detection signal DS, thereby making it possible to multiplex and transmit the input audio signal AS_IN.

### (Third Embodiment)

FIG. **8** is a block diagram showing a general configuration of a transmitter/receiver according to a third embodiment of the present invention.

The transmitter/receiver of the present embodiment includes a transmitter **82** and a receiver **84.**

The transmitter **82** shown in the figure differs from the transmitter of the first embodiment (FIG. 1) only in that the transmitter **82** includes therein a DAC (the output means) **81,** and a video signal is output from the DAC **81** to an analog TV (the video display means) **83.** Otherwise, the configuration of the transmitter **82** is similar to that shown in FIG. **1****,** and will not be further described below.

The receiver **84** includes therein an audio receiver circuit (the audio receiving means) **85,** an amplifier **111** and a speaker **112,** and the audio receiver circuit 85 includes therein a receiver circuit **18** and a demultiplexer **19.**

In the present embodiment, the input video signal VS_IN input to the transmitter **82** is supplied to a selection circuit **12** and is also supplied to the DAC **81**. The input video signal VS_IN supplied to the DAC **81** is subjected to a digital/analog conversion, and the converted analog video signal A_VS is output to the analog TV 83, on which a video of the video signal is displayed.

The receiver **84** receives the video/audio signal VAS transmitted from the transmitter **82**, and the video/audio signal VAS is input to the receiver circuit **18** in the audio receiver circuit **85**. Then, the video/audio signal VAS is input to the demultiplexer **19**, where it is separated into the output video signal VS_OUT and the output audio signal AS_OUT. The output audio signal AS_OUT is output to the speaker **112** via the amplifier **111.**

Although the video/audio signal VAS is input to the receiver **84,** e.g., an AV amplifier, and the output video signal VS_OUT separated from the video/audio signal VAS can be output, an analog TV cannot display a high-resolution video signal or a digital video signal. Therefore, the input video signal VS_IN input to the transmitter **82** is subjected to a digital/analog conversion through the DAC **81**, being the output means, and the obtained analog video signal A_VS is output to the analog TV **83**, thus allowing the video to be displayed thereon.

Therefore, in the present embodiment, an audio signal having a high sample rate or a multi-channel audio signal can be multiplexed and transmitted so as to be output from the speaker **112** in the receiver **84.** Moreover, the input video signal VS_IN, being a digital signal, is converted to the analog video signal A_VS, whereby the video signal can be displayed on the analog TV **83**, being less expensive than a digital TV.

A transmitter/receiver according to an alternative embodiment of the present invention will now be described.

FIG. **9** is a block diagram showing a general configuration of a transmitter/receiver according to an alternative embodiment of the present invention.

The transmitter/receiver of the present embodiment includes a transmitter **91** and a receiver **84**.

The transmitter **91** shown in the figure differs from the transmitter of the second embodiment (FIG. **7**) only in that the transmitter **91** includes therein a DAC (the output means) **81**, and a video signal is output from the DAC **81** to an analog TV (the video display means) **83**. Otherwise, the configuration of the transmitter **91** is similar to that shown in FIG. **7****,** and will not be further described below.

The operations of the DAC **81**, the analog TV **83** and the receiver **84** are similar to those of the third embodiment (FIG. **8**), and will not be further described below.

In the present embodiment, the input video signal VS_IN can be displayed on the analog TV **83**. Moreover, one of the dummy video signal VS_D and the input video signal YS_IN can be selected automatically, and the input audio signal AS_IN can be transferred while being multiplexed therewith.

While the dummy signal production circuit **11** produces the dummy video signal YS_D of a monochromatic video in the description above, it is understood that it may be any video as long as the resolution thereof is higher than that of the input video signal VS_IN input to the transmitter **14, 72, 82** or **91**.

While the description above is directed to a configuration where the input video signal VS_IN and the input audio signal AS_IN are input to the transmitter **14, 72**, **82** or **91** from the MPEG2 decoder **17,** the present invention is also applicable to cases where only the audio signal is input from a CD, or the like. In such a case, there is no need for the selection circuit **12**.

### INDUSTRIAL APPLICABILITY

As described above, an input audio signal is multiplexed with a high-resolution dummy video signal. Therefore, irrespective of the sample rate, etc., of the audio signal, it is possible to transmit a video/audio signal obtained by multiplexing the audio signal with the video signal, and it is possible to improve the anti-tampering property. Thus, the present invention is useful, for example, as a transmitter or a transmitter/receiver of a DVD player or a DVD recorder.

## Claims

1. A transmitter for transmitting a video/audio signal, comprising:
dummy signal production means for producing a dummy video signal; and
video/audio transmitter means for multiplexing together the dummy video signal and an input audio signal input to the transmitter to produce and transmit a video/audio signal.

2. The transmitter of claim 1, wherein:
an input video signal of a predetermined resolution is input;
the dummy signal production means produces a dummy video signal having a higher resolution than the predetermined resolution of the input video signal;
the transmitter further comprises selection means for selecting one of the input video signal and the dummy video signal based on an amount of information of the input audio signal to output the video signal selected as a selected video signal; and
the video/audio transmitter means produces the video/audio signal by multiplexing together the selected video signal and the input audio signal.

3. The transmitter of claim 2, wherein the selection means is controlled by an input control signal to select the dummy video signal when the amount of information of the input audio signal is such that the input audio signal cannot be multiplexed with the input video signal of the predetermined resolution.

4. The transmitter of claim 2 or 3, wherein the video/audio transmitter means multiplexes the input audio signal on at least one of a vertical blanking period and a horizontal blanking period of the selected video signal.

5. The transmitter of any of claims 2 to 4, wherein the dummy signal production means produces a dummy video signal, which includes a vertical synchronization signal, a horizontal synchronization signal and predetermined video data.

6. The transmitter of claim 2, further comprising format detection means for detecting a format of the input video signal of the predetermined resolution to output a detection signal, which indicates whether the input audio signal can be multiplexed with the input video signal of the predetermined resolution, based on the format information and the amount of information of the input audio signal,
wherein the selection means selects one of the dummy video signal and the input video signal based on the detection signal input from the format detection means.

7. The transmitter of claim 6, wherein the video/audio transmitter means multiplexes the input audio signal on at least one of a vertical blanking period and a horizontal blanking period of the selected video signal.

8. The transmitter of claim 6 or 7, wherein the dummy signal production means produces a dummy video signal, which includes a vertical synchronization signal, a horizontal synchronization signal and predetermined video data.

9. A transmitter/receiver, comprising:
the transmitter of claim 3; and
a receiver for receiving a video/audio signal transmitted from the transmitter, wherein:
the transmitter further includes:
output means for outputting the input video signal; and
video display means for displaying the input video signal output from the output means; and
the receiver includes audio receiving means for receiving the video/audio signal transmitted from the video/audio transmitter means in the transmitter and separating the received video/audio signal into an output video signal and an output audio signal.

10. The transmitter/receiver of claim 9, wherein the output means in the transmitter outputs the input video signal after converting the input video signal to an analog video signal.

11. The transmitter/receiver of claim 9 or 10, wherein the video/audio transmitter means in the transmitter multiplexes the input audio signal on at least one of a vertical blanking period and a horizontal blanking period of the selected video signal.

12. The transmitter/receiver of any of claims 9 to 11, wherein the dummy signal production means in the transmitter produces a dummy video signal, which includes a vertical synchronization signal, a horizontal synchronization signal and predetermined video data.

13. A transmitter/receiver, comprising:
the transmitter of claim 6; and
a receiver for receiving a video/audio signal transmitted from the transmitter,
wherein:
the transmitter further includes:
output means for outputting the input video signal; and
video display means for displaying the input video signal output from the output means; and
the receiver includes audio receiving means for receiving the video/audio signal transmitted from the video/audio transmitter means in the transmitter and separating the received video/audio signal into an output video signal and an output audio signal.

14. The transmitter/receiver of claim 13, wherein the output means in the transmitter outputs the input video signal after converting the input video signal to an analog video signal.

15. The transmitter/receiver of claim 13 or 14, wherein the video/audio transmitter means in the transmitter multiplexes the input audio signal on at least one of a vertical blanking period and a horizontal blanking period of the selected video signal.

16. The transmitter/receiver of any of claims 13 to 15, wherein the dummy signal production means in the transmitter produces a dummy video signal, which includes a vertical synchronization signal, a horizontal synchronization signal and predetermined video data.
